# EUROPÄISCHE PATENTSCHRIFT

(11) **EP 1 762 334 B1**
(45) Veröffentlichungstag und Bekanntmachung des Hinweises auf die Patenterteilung: **05.11.2008**
(21) Anmeldenummer: 06018772.1
(22) Anmeldetag: 07.09.2006
(51) Int. Cl.: B23Q 11/08

(54) **Gliederschürzeneinrichtung**
Protecting device for a machine tool
Dispositif de protection pour un machine-outil

(30) Priorität: 08.09.2005 DE 202005014233 U
(43) Veröffentlichungstag der Anmeldung: 14.03.2007
(73) Patentinhaber: Arno Arnold GmbH, 63179 Obertshausen (DE)
(72) Erfinder: Mang, Wolf, 63179 Obertshausen (DE)
(74) Vertreter: von den Steinen, Axel

(56) Entgegenhaltungen:
- WO-A-20/04073921
- DE-A1- 19 757 729
- DE-C- 942 431
- DE-U1- 8 104 252

## Beschreibung

Die Erfindung betrifft, gemäß dem Oberbegriff des Schutzanspruchs 1, wie z.B. aus der WO 2004 1 073 921 A1 bekannt, eine Gliederschürzeneinrichtung mit einer Gliederschürzc, wobei die Gliederschürze eine Mehrzahl sich quer zu ihrer Längsachse erstreckender, auf zumindest einem Trägerband angeordneter Schutzlamellen aufweist, und wobei die Längskanten der Gliederschürze mit Führungsschienen für die Führung der Gliederschürze in Eingriff bringbar sind.

Gliederschürzeneinrichtungen der in Rede stehenden Art dienen beispielsweise, jedoch keineswegs ausschließlich, zur bewegbaren Abdeckung von Teilbereichen an Werkzeugmaschinen oder dergleichen, um auf diese Weise das Ein- oder Austreten beispielsweise von Schmutz oder Metallspänen zu verhindern, oder um bewegliche Maschinenbereiche so abzutrennen, dass Verletzungsgefahren für das Bedienpersonal ausgeschlossen sind.

Eine Gliederschürzeneinrichtung mit Gliederschürze der eingangs genannten Art ist beispielsweise auch aus der DE 19 757 729 A1 bekannt. Die hieraus bekannte Gliederschürze weist eine Vielzahl von Schutzlamellen auf, die durch elastische Gliederverbinder - beispielsweise aus Polyurethan - miteinander verbunden sind. Bei dieser bekannten Gliederschürze ist es jedoch erforderlich - insbesondere um die elastischen Gliederverbinder in den Längskanten der Schutzlamellen aufnehmen zu können - dass die Schutzlamellen eine verhältnismäßig große Dicke aufweisen müssen.

Dies bringt jedoch auch ein hohes Gewicht mit sich bzw. führt zu einer hohen Masse der Gliederschürze mit den entsprechenden Folgen sowohl bei den Kosten, als auch bezüglich des erheblichen zum Einbau notwendigen Bauraums.

Ferner spielt die erhöhte Masse vor allem eine nachteilige Rolle bei modernen Werkzeugmaschinen, deren Verfahrbewegungen eine äußerst hohe Dynamik aufweisen, wodurch mitbewegte Teile wie beispielsweise Gliederschürzen erhebliche Trägheitskräfte erzeugen. Daher sind bei derartigen aus dem Stand der Technik bekannten Gliederschürzen vergleichsweise hohe dynamische Kräfte erforderlich, um die Gliederschürzen verfahren bzw. aufwickeln zu können, was hohen konstruktiven Aufwand mit sich bringt und die Maschine sowie deren Antrieb zudem unnötig belastet.

Überdies lassen sich derartige bekannte, verhältnismäßig dicke Gliederschürzen vergleichsweise schlecht aufwickeln, und erzeugen zudem im aufgewickelten Zustand große Wickeldurchmesser, die wiederum zu Problemen mit dem zur Verfügung stehenden Bauraum führen können.

Darüber hinaus ist es bei derartigen aus dem Stand der Technik bekannten Gliederschürzen erforderlich, dass die zu Befestigung und beweglicher Führung der Gliederschürzen stets erforderlichen Führungsschienen aufgrund des hohen Gewichts derartiger Gliederschürzen besonders massiv bzw. robust ausgeführt werden müssen, und zudem mittels entsprechender Bürstenabstreifer vor Verschmutzungen durch beispielsweise Metallspäne oder Kühlschmiermittel geschützt werden müssen.

Schließlich ist auch die Herstellung und Montage der bekannten Gliederschürzen vergleichsweise aufwändig und damit teuer, da hierzu einerseits tendenziell teure Hohlprofile mit kompliziertem Querschnitt produziert werden müssen, und da andererseits Vorkehrungen getroffen werden müssen, damit die elastischen Gliederverbinder nicht aus ihren entsprechenden Aufnahmen in den Schutzlamellen herausgleiten, bzw. damit benachbarte Schutzlamellen sich nicht gegeneinander verschieben können.

Ähnliche Nachteile weisen auch die ebenfalls aus dem Stand der Technik bekannten Gliederschürzen auf, bei denen Schutzlamellen auf einem Trägerband befestigt sind. Dergestalt aufgebaute, bekannte Gliederschürzen sind zudem nachteilig insofern, als das Trägerband dort verhältnismäßig exponiert und anfällig gegenüber Beschädigungen beispielsweise durch Metallspäne ist.

Ein weiterer erheblicher Nachteil auch dieser aus dem Stand der Technik bekannten Gliederschürzen besteht darin, dass die zumeist in Form von vergleichsweise massiven U-Profilen ausgeführten Führungsschienen solchermaßen aufgebauter Gliederschürzeneinrichtungen zu Verschmutzungen durch beispielsweise Metallspäne und Kühlschmiermittel neigen, weshalb auch hier zumeist aufwändige Bürstenabstreifer vorzusehen sind, mit denen die Führungsschienen vor Verschmutzungen geschützt werden sollen.

Durch derartige Bürstenabstreifer wird jedoch die eigentlich wünschenswerte Leichtgängigkeit der Gliederschürze potenziell massiv beeinträchtigt. Zudem ist sowohl Montage als auch Wartung von Gliederschürzen mit Bürstenabstreifern im Bereich der Führungsschienen aufwändig und damit teuer.

Mit diesem Hintergrund ist es Aufgabe der vorliegenden Erfindung, eine gattungsgemäße Gliederschürzeneinrichtung zu schaffen, mit der sich die beschriebenen Nachteile des Standes der Technik überwinden lassen. Dabei sollen insbesondere Gewichts- und Kostenreduktion sowie konstruktive Vereinfachungen insbesondere im Bereich der Führungseinrichtung, bei gleichzeitig erweitertem Anwendungsbereich erreicht werden.

Diese Aufgabe wird durch eine Gliederschürzeneinrichtung nach der Lehre des Schutzanspruchs 1 gelöst.

Bevorzugte Ausführungsformen der Erfindung sind Gegenstand der Unteransprüche.

Die Gliederschürzeneinrichtung gemäß der vorliegenden Erfindung dient in an sich zunächst bekannter Weise insbesondere der bewegbaren Abdeckung von Teilbereichen an Werkzeugmaschinen oder dergleichen, und umfasst eine Gliederschürze, die wiederum eine Mehrzahl sich quer zur Längsachse der Gliederschürze erstreckender Schutzlamellen aufweist. Dabei besitzt die Gliederschürzeneinrichtung ferner zumindest ein entlang der Längsachse der Gliederschürze verlaufendes Trägerband, wobei die Schutzlamellen im Bereich einer der Oberflächen des Trägerbands angeordnet sind. Ferner ist in an sich ebenfalls bekannter Weise im Bereich der Längskanten der Gliederschürze eine Führungseinrichtung mit Führungsschienen zur Führung der Gliederschürze angeordnet.

Erfindungsgemäß zeichnet sich die Gliederschürzenanordnung jedoch dadurch aus, dass jeder Schutzlamelle im Bereich jedes ihrer beiden lamellenaxialen Enden jeweils zumindest ein zwischen Schutzlamelle und Trägerband angeordnetes Tragstück zugeordnet ist. Dabei ist das zumindest eine Tragstück und/oder das Ende der Schutzlamelle selbst, mit einer Führungsschiene der Gliederschürzeneinrichtung in Eingriff bringbar.

Dies führt zunächst einmal bereits zu einer vorteilhaften, funktionalen Trennung der konstruktiven Aufgaben "Transport" bzw. "Antrieb der Gliederschürze" sowie der Aufgabe der Schutzfunktion gegenüber äußeren Einwirkungen und der Aufgabe der Führung der Gliederschürze in den Führungsschienen. Denn dank der erfindungsgemäßen Gestaltung der Gliederschürzeneinrichtung können sowohl Transportband, als auch Tragstücke sowie Schutzlamellen jeweils spezifisch auf die diesen Bestandteilen jeweils zukommenden Aufgaben hin konstruktiv optimiert werden.

Dies gilt insbesondere für das Führungssystem der erfindungsgemäßen Gliederschürze, das dank der Erfindung in besonderem Maße hinsichtlich der Aufgabe der Führung der Gliederschürze, sowie in Bezug auf den konstruktiven Schutz der Führungsschienen vor Verschmutzungen oder Metallspänen optimiert werden kann. Gleichzeitig wird hierbei jedoch eine bisher nicht gegebene konstruktive Freiheit bezüglich der Gestaltung der Schutzlamellen erreicht, da die Aufgabe der Führung erfindungsgemäß entweder vom Tragstück, oder aber vom axialen Ende der Schutzlamellen, oder durch eine Kombination dieser beiden Elemente übernommen werden kann.

Gemäß einer bevorzugten Ausführungsform der Erfindung ist es dabei vorgesehen, dass die Tragstücke als Führungselemente zur Führung der Gliederschürze in den Führungsschienen ausgebildet sind. Dies ist vorteilhaft insofern, als auf diese Weise eine konstruktive Mehrfachnutzung der Tragstücke sowohl für die Befestigung der Schutzlamellen am Trägerband, als auch für die Führung der Gliederschürze erreicht wird.

Mit diesem Hintergrund ist es gemäß einer weiteren Ausführungsform der Erfindung vorgesehen, dass jeder Schutzlamelle zumindest ein weiteres Tragstück zugeordnet ist. Das zumindest eine weitere Tragstück ist dabei im Bereich zwischen den beiden lamellenaxialen Enden, bzw. mit anderen Worten zwischen den beiden den Enden der Schutzlamelle zugeordneten Tragstücken angeordnet. Diese Ausführungsform kommt insbesondere dann zur Anwendung, wenn besonders breite Gliederschürzen dargestellt werden sollen, deren Schutzlamellen somit eine große Länge aufweisen. Da die Schutzlamelle über die Tragstücke mit dem Trägerband verbunden ist, kann hierdurch eine Abstützung der Schutzlamelle nicht nur an deren Enden, sondern auch an beliebigen Stellen zwischen den Enden der Schutzlamelle, beispielsweise in der Mitte der Schutzlamelle, erfolgen.

Es ist zur Verwirklichung der Erfindung zunächst nicht erheblich, auf welche Weise der gleitende Eingriff der Tragstücke mit den Führungsschienen der Gliederschürzeneinrichtung erfolgt, solange eine sichere und geschützte Ausführung der Führungseinrichtung gewährleistet ist. Gemäß einer besonders bevorzugten Ausführungsform der Erfindung weisen die Tragstücke jedoch einen quer zur Längsachse der Gliederschürze abragenden Gleitfortsatz auf.

Dies ist vorteilhaft insofern, als sich die Tragstücke auf diese Weise in einer einfachen, jedoch robusten und zuverlässigen U-förmigen Führungsschiene aufnehmen lassen. Je nach der konstruktiven Ausgestaltung der Tragstücke können die Führungsschienen jedoch auch L-förmig ausgeführt, oder sogar mit einem im Wesentlichen I-förmigen, bzw. stabförmigen Querschnitt ausgebildet werden, was die konstruktive Umsetzung und Montage der Führungseinrichtung weiter erheblich vereinfacht.

Gemäß einer weiteren Ausführungsform der Erfindung weist das Tragstück im Bereich der axialen Enden der Schutzlamellen eine Laufrolle auf. Diese Ausführungsform erlaubt die Konstruktion von Gliederschürzen mit besonders leichtem, spielfreien Lauf auch und gerade zum Einsatz bei modernen, hochdynamischen Maschinenantrieben.

Material, Ausführung und Bauform der Schutzlamellen sind zur Verwirklichung der Erfindung zunächst einmal unerheblich und können in Abhängigkeit der jeweiligen Belastungs- und Verschmutzungssituation weitestgehend frei gewählt werden.

Gemäß einer bevorzugten Ausführungsform der Erfindung bestehen die Schutzlamellen jedoch aus Stahlblech, besonders bevorzugt aus Federstahl. Auf diese Weise lassen sich die Gliederschürzen mit besonders geringem Gewicht bei gleichzeitig hoher Beanspruchbarkeit, insbesondere mit besonders hoher Elastizität auslegen. Die Elastizität der Schutzlamellen spielt insbesondere dort eine Rolle, wo beispielsweise Metallspäne mit hohen Geschwindigkeiten auf die durch die Gliederschürze gebildete Abtrennung aufprallen. Schutzlamellen aus Stahl, insbesondere aus Federstahl werden - im Gegensatz zu den häufig aus Aluminium gefertigten Schutzlamellen im Stand der Technik - davon praktisch nicht beeinträchtigt, da in diesem Fall ein elastischer Rückprall der aufprallenden Metallspäne stattfindet.

Nach einer weiteren bevorzugten Ausführungsform der Erfindung bestehen die Schutzlamellen aus einem Polymerwerkstoff, wobei die Schutzlamellen vorzugsweise die Form eines langgestreckten Bandes mit zumindest einem längs verlaufenden Versteifungssteg aufweisen. Falls somit beispielsweise genau ein längs verlaufender Versteifungssteg vorhanden ist, weisen die so ausgeführten Schutzlamellen somit näherungsweise eine T-Querschnittsform auf.

Gemäß einer weiteren, besonders bevorzugten Ausführungsform der Erfindung weisen die Schutzlamellen im Bereich Ihrer Längskanten Abkantungen auf. Auf diese Weise lassen sich auch mit dünnwandigen, und damit besonders leichten Schutzlamellen sehr hohe Biegesteifigkeiten der Schutzlamellen erreichen. Ferner werden mit einer solchen Gestaltung zudem auch Schutzlamellen mit abgerundeten Längskanten erhalten, was beispielsweise die Verletzungsgefahr beim Berühren einer sich bewegenden Gliederschürze verringert, und die Gefahr des Verhakens bzw. Verspießens von Metallspänen in den Zwischenräumen zwischen den Schutzlamellen der Gliederschürze verringert.

Nach einer weiteren Ausführungsform der Erfindung weist zumindest jede zweite Schutzlamelle der Gliederschürze im Bereich zumindest einer Ihrer Längskanten zumindest einen langgestreckten Schlitz auf. Gleichzeitig ist dabei zumindest eine im Bereich der Längskante einer benachbarten Schutzlamelle angeordnete, langgestreckte Lasche mit dem Längsschlitz der ersteren Schutzlamelle in Eingriff bringbar.

Dies bedeutet mit anderen Worten, dass benachbarte Schutzlamellen nicht nur unmittelbar und weitestgehend dicht aneinander anschließen, sondern dass die benachbarten Schutzlamellen mittels des jeweiligen Eingriffs der Laschen der einen Schutzlamelle in die Längsschlitze der anderen Schutzlamelle eine noch innigere sowie geschlossen durchgehende Schutzschicht gegenüber auf die Gliederschürze einwirkende äußere Einflüsse bilden. Dies gilt bei dieser Ausführungsform insbesondere auch dann, wenn die Gliederschürze stellenweise nicht mehr eben verläuft, sondern beispielsweise entlang einer bogenförmigen Maschinenkontur bzw. Führungsschiene geleitet wird.

Die Erfindung lässt sich verwirklichen unabhängig davon, wie die Tragstücke mit dem Trägerband verbunden werden, solange diese Verbindung den im Betrieb der Gliederschürze anfallenden Belastungen und äußeren Einwirkungen standhält. Gemäß einer bevorzugten Ausführungsform der Erfindung sind jedoch die Tragstücke stoffschlüssig mit dem Trägerband verbunden, insbesondere mit dem Trägerband verklebt. Diese Ausführungsform besitzt den Vorteil der kostengünstigen Fertigung, wobei die Fertigung zudem besonders gut automatisierbar ist.

Gemäß einer alternativen Ausführungsform der Erfindung sind die Tragstücke formschlüssig mit dem Trägerband verbunden, insbesondere verschraubt oder vernietet. Auf diese Weise lässt sich eine besonders hohe Festigkeit der Verbindung zwischen den Tragstücken und dem Trägerband erreichen, insbesondere wenn beispielsweise mehrere Verbindungselemente pro Tragstück verwendet werden. Ferner eignet sich diese Ausführungsform auch besonders für kundenspezifische Sonderabmessungen und ist zudem einfach reparierbar.

Mit ähnlichem Hintergrund ist es gemäß einer weiteren Ausführungsform der Erfindung vorgesehen, dass der zur Verbindung des Tragstücks mit dem Trägerband dienende Niet bzw. die dementsprechenden Niete einstückig mit dem Tragstück ausgebildet sind. Auf diese Weise wird eine einfache und kostengünstige Montierbarkeit erreicht, die dergestalt erfolgt, dass der an das Tragstück angeformte Niet, bzw. die Niete, durch einen entsprechenden Durchbruch im Trägerband durchgesteckt werden, wobei anschließend durch Umformen des Nietendes der Nietkopf ausgebildet wird.

Nach einer weiteren Ausführungsform der Erfindung ist vorgesehen, dass die überstehenden Kopfbereiche von Befestigungsschrauben oder Nieten, mit denen die Tragstücke mit dem Trägerband verbunden sind, gleichzeitig als Mitnehmernocken eines motorischen Antriebs der Gliederschürze herangezogen werden. Diese Ausführungsform kann insbesondere dann mit Vorteil zum Einsatz kommen, wenn eine wirksame motorische Unterstützung der Verfahrbewegung der Gliederschürze erreicht werden soll, In diesem Fall werden beispielsweise die zur Umlenkung der Gliederschürze dienenden Umlenkrohre oder -wellen mit verzahnten Antriebselementen ausgestattet, wobei die auf der Rückseite des Trägerbandes überstehenden Befestigungsniete bzw. -schrauben in die verzahnten Antriebselemente eingreifen und somit für eine formschlüssige Kraftübertragung zwischen den - in diesem Fall angetriebenen - Umlcnkwellen und der Gliederschürzc dienen.

Gemäß einer weiteren Ausführungsform der Erfindung sind die Tragstücke einstückig mit dem Trägerband ausgebildet. Diese Ausführungsform, bei der die Tragstücke beispielsweise, jedoch keineswegs ausschließlich, in Form von auf das Trägerband aufvulkanisierten Elementen ausgebildet sein können, erlaubt insbesondere weitere Kostenreduzierungen bei Herstellung und Montage der Gliederschürze. Zudem ist die einstückige Verbindung zwischen Tragstücken und Trägerband besonders robust und weist eine hohe Dauerfestigkeit auf.

Gemäß einer weiteren Ausführungsform der Erfindung weisen die Schutzlamellen im Bereich ihrer axialen Enden abragende Biegelaschen auf. Diese Biegelaschen, die insbesondere im Bereich der Längskanten oder der Abkantungen der Schutzlamellen angeordnet sein können, sind dabei mit formkorrespondierenden Durchbrüchen im Trägerband in Eingriff bringbar. Auf diese Weise können Trägerband, gegebenenfalls Tragstück und Schutzlamelle in einem einzigen Befestigungsarbeitsgang miteinander verbunden werden, indem die durch die entsprechenden Durchbrüche im Trägerband durchgesteckten Biegelaschen auf der Rückseite des Trägerbandes umgebogen werden. Diese Ausführungsform ist nicht nur besonders einfach aufgebaut und damit kostensparend, sondern benötigt auch besonders wenig Bauraum.

Zur Verwirklichung der Erfindung ist es zunächst einmal unerheblich, auf welche Weise die Tragstücke mit den Schutzlamellen verbunden werden. Gemäß einer bevorzugten Ausführungsform der Erfindung sind jedoch die Tragstücke mittels einer Steck-, Rast- oder Schnappverbindung mit den Schutzlamellen verbindbar. Eine solche Steck-, Rast- oder Schnappverbindung ist einerseits kostengünstig in der Produktion und erlaubt andererseits eine besonders einfache und schnelle Montage von Tragstücken und Schutzlamellen.

Mit diesem Hintergrund ist es gemäß einer weiteren, bevorzugten Ausführungsform der Erfindung vorgesehen, dass das Tragstück einen im Wesentlichen prismatischen Verbindungsbereich aufweist, der in lamellenaxialer Richtung in den axialen Endbereich einer Schutzlamelle einschiebbar ist. Dies führt zur innigen und in zumindest zwei Raumrichtungen bereits formschlüssigen Verbindung zwischen Tragstücken und Schutzlamellen.

Zur weiteren Verbesserung der Verbindung zwischen Tragstück und Schutzlamelle ist es gemäß einer weiteren Ausführungsform der Erfindung dabei vorgesehen, dass das Tragstück in Einschubrichtung in das axiale Ende der Schutzlamelle zumindest einen Hinterschnitt aufweist, der mit einem zum Hinterschnitt formkorrespondierenden Durchbruch im axialen Endbereich der Schutzlamelle in Eingriff bringbar ist. Auf diese Weise wird die Steckverbindung zwischen Tragstück und Schutzlamelle insbesondere auch vor dem selbsttätigen Lösen bzw. unbeabsichtigten Auseinanderfallen sicher geschützt.

Besonders bevorzugt sind dabei sowohl Durchbruch als auch Hinterschnitt im Bereich der längsseitigen Abkantung der Schutzlamelle angeordnet. Auf diese Weise entfällt jede Beeinträchtigung der Frontoberfläche der Gliederschürze durch die zur Fixierung der Tragstücke dienenden Durchbrüche.

Gemäß einer weiteren, besonders bevorzugten Ausführungsform der Erfindung weisen die axialen Enden der Schutzlamellen gegenüber dem abragenden Gleitfortsatz des Tragstücks in lamellenaxialer Richtung einen Überstand von einer gewissen Länge auf. Dies ist besonders vorteilhaft insofern, als auf diese Weise eine vollständige Abdeckung der Gleitfortsätze der Tragstücke, wie auch der Führungsschiene, in der die Gleitfortsätze geführt werden, erfolgen kann. Da die Führungsschiene auf diese Weise besonders gut geschützt ist, kann zudem auf Abstreifbürsten an den Längskanten bzw. im Bereich der Führungsschienen verzichtet werden, was zu erheblichen Kosteneinsparungen, zu einer wesentlich verbesserten Leichtgängigkeit der Gliederschürze wie auch zu einer Erhöhung der Lebensdauer führt, und was zudem die Montage der Gliederschürze vor Ort, beispielsweise an einer Werkzeugmaschine, erleichtert.

Im Hinblick darauf ist es gemäß weiterer bevorzugter Ausführungsformen der Erfindung ferner vorgesehen, dass die Führungsschiene im Wesentlichen L-förmig, bzw. im Querschnitt im Wesentlichen stabförmig ist. Hierdurch lässt sich ein noch weiter vereinfachter Aufbau insbesondere der Führungseinrichtung für die Gliederschürze erreichen. Dies hängt damit zusammen, dass im Querschnitt L-förmige bzw. stab- oder I-förmige Führungsschienen sowohl kostengünstiger in der Herstellung sind, als auch die Montage der Führungsschienen sowie der Gliederschürze hierdurch erheblich erleichtert wird. Dies gilt insbesondere für eine im Querschnitt stab- bzw. I-förmige Führungsschiene, da eine solche Schiene im Wesentlichen wie ein gerades Band ausgebildet ist, und sich somit besonders leicht verlegen und montieren lässt.

Gemäß einer weiteren Ausführungsform der Erfindung ist vorgesehen, dass die Tragstücke lamellenaxial verlaufende Bohrungsdurchbrüche, bzw. - im Bereich ihrer den Schutzlamellen zugewandten Oberfläche - im Wesentlichen lamellenaxial verlaufende, oberflächliche Kanäle aufweisen. Diese Durchbrüche bzw. Kanäle erlauben ein besseres Ablaufen von Kühlschmiermittel, das beispielsweise von einem sich drehenden Werkstück gegen die Gliederschürze geschleudert wird. Somit wird unerwünschtes Aufstauen von Kühlschmiermittel im Bereich der Tragstücke und auf der Innenoberfläche der Schutzlamellen vermieden.

Eine weitere Ausführungsform der Erfindung sieht vor, dass die Gliederschürze nicht eines, sondern zumindest zwei Trägerbänder aufweist, wobei jeder der beiden Längskanten der Gliederschürze eines der zumindest zwei Trägerbänder zugeordnet ist. Durch eine solche Auflösung eines durchgehenden Trägerbandes und dessen Ersatz durch zumindest zwei separate, schmale Trägerbänder wird die modulare, kundenspezifische Bereitstellung von Gliederschürzen unterschiedlichster Abmessungen erleichtert, und zudem lassen sich auf diese Weise weitere Gewichtseinsparungen erzielen, die wiederum eine höhere Bewegungsdynamik der Gliederschürze erlauben.

Schließlich ist nach einer weiteren Ausführungsform der Erfindung vorgesehen, dass zumindest eine der Schutzlamellen transparent oder durchsichtig ist, bzw. ein Fenster aufweist. Dies erlaubt kontrollierende Einsicht auch in Maschinenbereiche, die jeweils gerade durch die Gliederschürze abgedeckt sind.

Im Folgenden wird die Erfindung anhand lediglich Ausführungsbeispiele darstellender Zeichnungen näher erläutert.

Es zeigt:
- **Fig. 1**: in schematischer Darstellung ein Trägerband einer Gliederschürze für eine Gliederschürzeneinrichtung gemäß einer Ausführungsform der Erfindung;
- **Fig. 2**: in einer **Fig. 1** entsprechenden Darstellung eine Schutzlamelle der Gliederschürze gemäß **Fig. 1** in der Seitenansicht;
- **Fig. 3**: in einer **Fig. 1** und **2** entsprechenden Darstellung die Schutzlamelle gemäß Fig. 2 in der Draufsicht;
- **Fig. 4**: in einer **Fig. 1** bis **3** entsprechenden Darstellung die Schutzlamelle gemäß **Fig. 1** und **2** in einer vergrößerten Frontalen;
- **Fig. 5**: in schematischer isometrischer Darstellung ein Tragstück für eine erfindungsgemäße Gliederschürzeneinrichtung;
- **Fig. 6**: in schematischer Darstellung das Tragstück gemäß **Fig. 5** in der Rückansicht;
- **Fig. 7**: in einer **Fig. 6** entsprechender Darstellung das Tragstück gemäß **Fig. 5** und **6** in der Draufsicht;
- **Fig. 8**: in einer **Fig. 6** und **7** entsprechenden Darstellung einen Rastvorsprung des Tragstücks gemäß **Fig. 5** bis **7** in ausgebrochener, vergrößerter Ansicht;
- **Fig. 9**: in schematischer, isometrischer Darstellung ein axiales Ende der Schutzlamelle gemäß **Fig. 2** bis **4** mit dem darin angeordneten Tragstück gemäß **Fig. 6** bis **8****;**
- **Fig. 10**: in schematischer Darstellung Teilbereich einer Gliederschürze für eine Gliederschürzeneinrichtung gemäß der Erfindung in der vergrößerten Seitenansicht;
- **Fig. 11**: in einer **Fig. 10** entsprechenden, verkleinerten Darstellung die Gliederschürze gemäß Fig. 10 in seitlicher Gesamtansicht;
- **Fig. 12**: in schematischer Darstellung die Gliederschürze gemäß **Fig. 10** und **11** in der Draufsicht;
- **Fig. 13**: in schematischer isometrischer Darstellung die Gliederschürze gemäß **Fig. 10** bis **12** in der Untersicht;
- **Fig. 14**: in schematischer, teilweise geschnittener Darstellung eine Ausführungsform einer Gliederschürzeneinrichtung mit U-förmiger Führungsschiene mit Blickrichtung entlang des Trägerbandes;
- **Fig. 15**: in einer **Fig. 14** entsprechenden Darstellung und Ansicht eine Ausführungsform einer Gliederschürzeneinrichtung mit L-förmiger Führungsschiene;
- **Fig. 16**: in einer **Fig. 14** und **15** entsprechenden Darstellung und Ansicht eine Ausführungsform einer Gliederschürzeneinrichtung mit I-förmiger Führungsschiene;
- **Fig. 17**: in schematischer Darstellung eine Schutzlamelle mit Längsschlitz gemäß einer weiteren Ausführungsform der Erfindung in der Untersicht;
- **Fig. 18**: in einer **Fig. 17** entsprechenden Darstellung die Schutzlamelle gemäß **Fig. 17** in der Seitenansicht;
- **Fig. 19**: in einer **Fig. 17** und **18** entsprechenden Darstellung die Schutzlamelle gemäß **Fig. 17** und **18** in der Draufsicht;
- **Fig. 20**: in einer **Fig. 17** bis **19** entsprechenden Darstellung die Schutzlamelle gemäß **Fig. 17** bis **19** in einer vergrößerten frontalen Ansicht;
- **Fig. 21**: in einer **Fig. 17** bis **20** entsprechenden Darstellung eine Schutzlamelle mit Eingriffslasche in der Untersicht;
- **Fig. 22**: in einer **Fig. 17** bis **21** entsprechenden Darstellung die Schutzlamelle gemäß **Fig. 21** in der Seitenansicht;
- **Fig. 23**: in einer **Fig. 17** bis **22** entsprechenden Darstellung die Schutzlamelle gemäß **Fig. 21** und **22** in der Draufsicht; und
- **Fig. 24**: in einer **Fig. 17** bis 23 entsprechenden Darstellung die Schutzlamelle gemäß **Fig. 21** bis **23** in einer vergrößerten frontalen Ansicht.

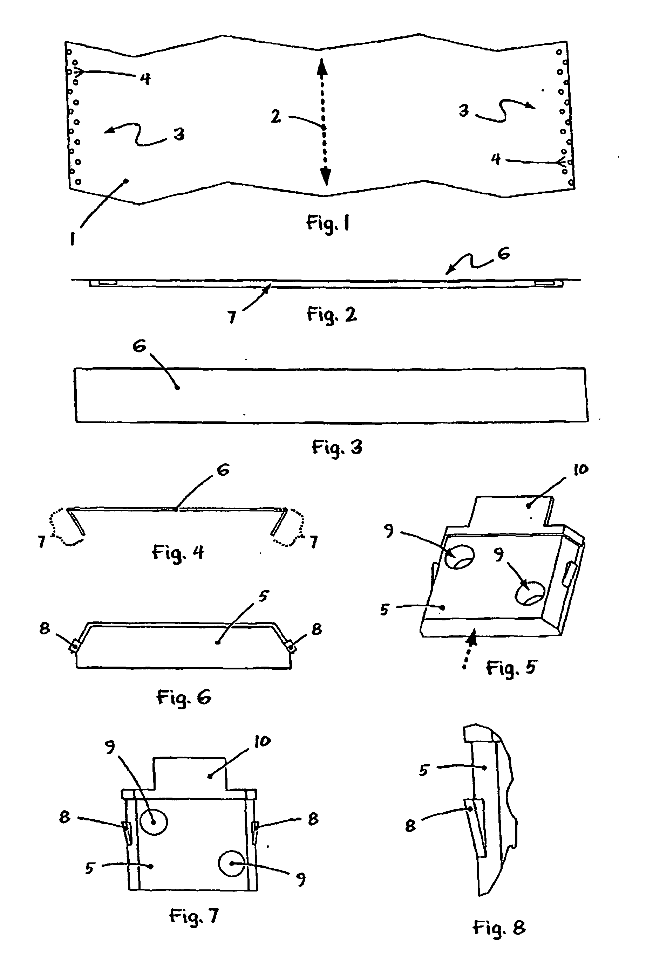

**Fig. 1** zeigt in schematischer Darstellung einen kurzen Abschnitt eines Trägerbands 1 einer Gliederschürze für eine Gliederschürzeneinrichtung gemäß der Erfindung, wobei der strichlierte Doppelpfeil 2 die Bewegungsrichtung des Trägerbandes 1 bzw. der Gliederschürze symbolisiert. Man erkennt, dass das Trägerband 1 im Bereich seiner Längskanten 3 mit Stanzungen bzw. Durchbrüchen 4 versehen ist. Die Stanzungen bzw. Durchbrüche 4 dienen zur Befestigung der Tragstücke 5 gemäß **Fig. 5** bis **8****.**

**Fig. 2** bis **4** zeigen eine Schutzlamelle 6 für eine erfindungsgemäße Gliederschürzeneinrichtung, wobei die Schutzlamelle 6 in **Fig. 2** in der Seitenansicht, in **Fig.** 3 in der Draufsicht und in **Fig. 4** in einer vergrößerten Frontalansicht dargestellt ist. Die Schutzlamelle 6 gemäß dieser Ausführungsform besteht aus sehr dünnen Stahlblech bzw. Federstahl und ist damit extrem leicht, was einem Einsatz einer mit solchen Schutzlamellen 6 ausgeführten Gliederschürze insbesondere bei Werkzeugmaschinen mit hochdynamischen Antrieben mit Vorteil entgegenkommt. Die dargestellte Schutzlamelle 6 weist jedoch aufgrund ihrer seitlichen Abkantungen 7, die sich über nahezu die gesamte Länge der Schutzlamelle 6 erstrecken, eine gleichzeitig hohe Stabilität, insbesondere eine hohe Biegesteifigkeit auf.

Die **Fig. 5** bis **8** zeigen ein Tragstück 5 für eine Gliederschürzeneinriehtung gemäß der vorliegenden Erfindung in verschiedenen Ansichten. **Fig. 5** ist eine isometrische Darstellung des Tragstücks 5, **Fig. 6** zeigt das Tragstück in der rückwärtigen Ansicht (Blickrichtung gemäß strichliertem Pfeil in **Fig. 5), Fig. 7** stellt die Draufsicht auf das Tragstück 5 dar, während **Fig. 8** einen der Rastvorsprünge 8 des Tragstücks gemäß **Fig. 5** bis 7 in vergrößerter Darstellung zeigt. In den **Fig. 5** und **7** erkennt man außer den Bohrungen 9, die zur Befestigung des Tragstücks 5 auf dem gelochten Trägerband 1 dienen, insbesondere auch den abragenden Gleitfortsatz 10 des Tragstücks 5, der zur Führung der Gliederschürze in einer entsprechenden, hier nicht dargestellten Führungsschiene dient.

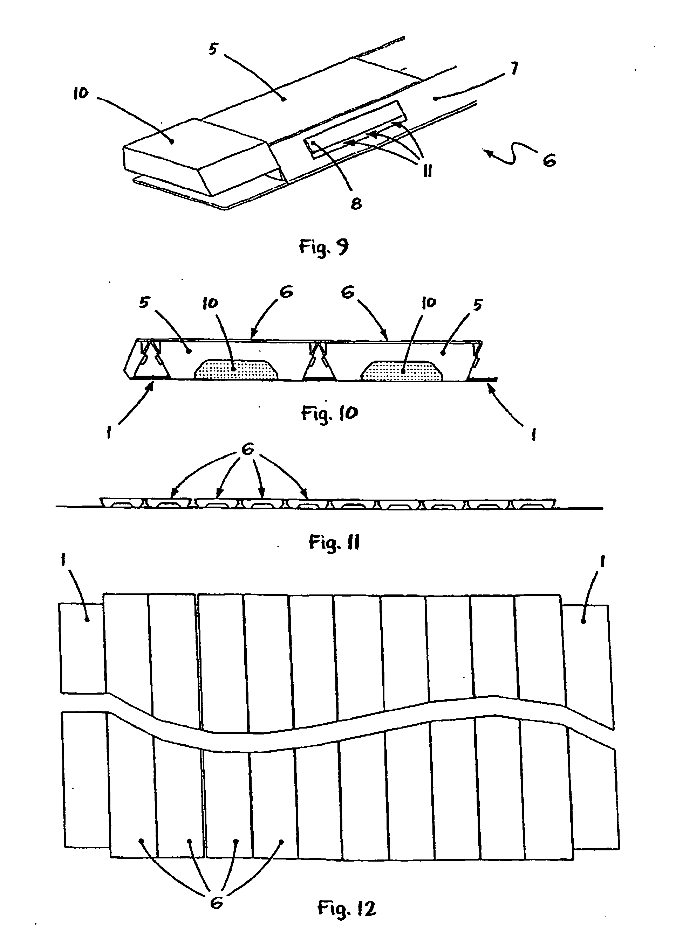

**Fig. 9** zeigt in isometrischer Darstellung eines der beiden Enden der Schutzlamelle 6 gemäß **Fig. 2** bis **4****.** Dabei ist im dargestellten Endbereich der Schutzlamelle 6 bereits ein Tragstück 5, wie ähnlich bereits in **Fig. 6** bis **8** gezeigt, mit seinem abragenden Gleitfortsatz 10 angeordnet. Man erkennt, dass die Rastvorsprünge 8 des Tragstücks mit entsprechenden, zu den Rastvorsprünge 8 formkorrespondierenden Rastdurchbrüchen 11, die sich im Endbereich der abgekanteten Längskanten 7 der Schutzlamellen 6 befinden, in Eingriff gebracht worden sind. Auf diese Weise werden die Tragstücke 5 fest und unverlierbar mit den Schutzlamellen 6 verbunden.

**In** **Fig. 10** ist ein Teilbereich einer erfindungsgemäßen Gliederschürze in gegenüber **Fig. 11** vergrößerter Seitenansicht dargestellt. Man erkennt zunächst einmal das hier durchgehend schwarz gezeichnete Trägerband 1, sowie die auf dem Trägerband 1 angeordneten Tragstücke 5. Der leichteren Erkennbarkeit halber sind die Gleitfortsätze 10 der Tragstücke 5, die in der Darstellung der **Fig. 10** aus der gedachten Zeichenebene herausragen, mittels punktierter Flächen hervorgehoben. Man erkennt in **Fig. 10** ferner die jeweils auf den Tragstücken 5 angeordneten Schutzlamellen 6, wobei die Schutzlamellen 6 in **Fig. 10** auf die gleiche Weise mit den Tragstücken verbunden sind, wie dies aus **Fig. 9** hervorgeht.

**Fig. 11** zeigt die Gliederschürze gemäß **Fig. 10** in einer Zusammenbaudarstellung, während **Fig. 12** dieselbe Gliederschürze gemäß **Fig. 10** und 11 in der Draufsicht darstellt. Man erkennt, dass die Schutzlamellen 6 mit ihren Längskanten jeweils unmittelbar aneinander angrenzen, wodurch eine glatte, ebene und gegenüber Fremdkörpern undurchlässige Oberfläche der Gliederschürze gebildet wird.

Besonders deutlich geht aus **Fig. 12** auch hervor, dass die Schutzlamellen 6 eine größere Länge aufweisen, als dies der Breite des Trägerbandes 1 entspricht. Dies bedeutet mit anderen Worten, dass die durch die Schutzlamellen 6 gebildete Oberfläche der Gliederschürze breiter ist als das Trägerband 1, und dabei insbesondere auch die abragenden Gleitfortsätze 10 der Tragstücke 5 bedeckt. Auf diese Weise wird ein besonders guter Schutz der hier nicht eigens dargestellten Führungsschienen der Gliederschürze erreicht, so dass bei dieser Ausführungsform der erfindungsgemäßen Gliederschürzcneinrichtung auf die im Stand der Technik üblichen und notwendigen Bürstenabstreifer im Bereich der Führungsschienen verzichtet werden kann.

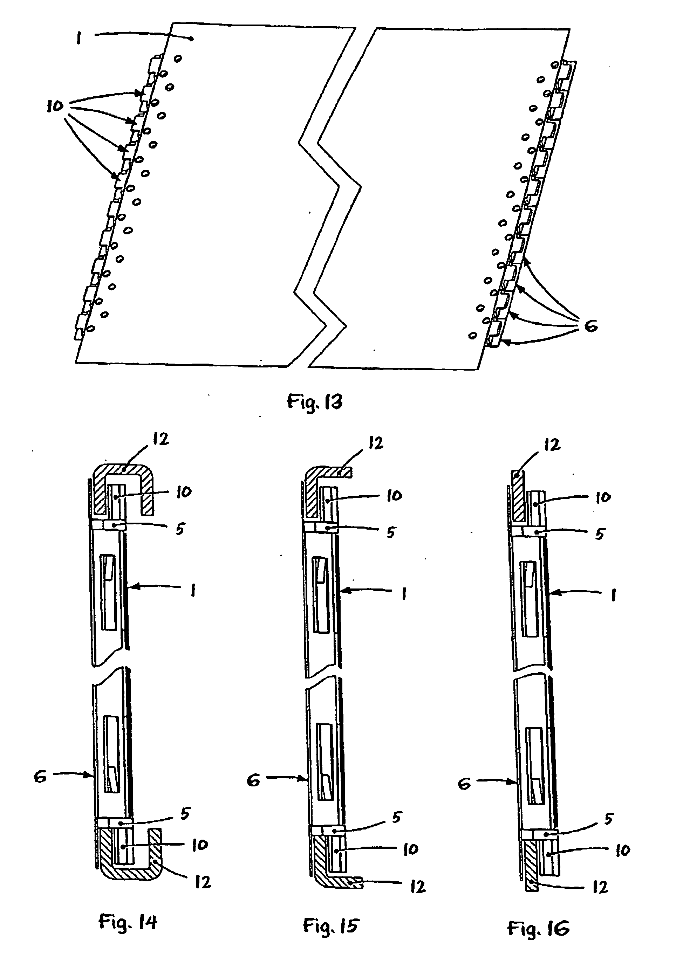

**Fig. 13** zeigt die Gliederschürze gemäß **Fig. 10** bis **12** in der Untersicht. Man erkennt neben dem gelochten Trägerband 1 insbesondere die Befestigung der Schutzlamellen 6, die gemäß **Fig. 1, 5** und **10** mittels der Tragstücke 5 unter Verwendung der Befestigungsdurchbrüche des Trägerbandes 1 mit dem Trägerband 1 verbunden sind. Ferner zeigt auch **Fig. 13** wieder den seitlichen Überstand der Schutzlamellen 6 sowohl über die Breite des Trägerbandes 1, als auch über die von den Tragstücken 5 abragenden Gleitfortsätze 10, die der Führung der Gliederschürze in den (hier nicht dargestellten) Führungsschienen gemäß **Fig. 14** bis **16** dienen.

Die **Fig. 14** bis **16** zeigen jeweils Ausführungsformen erfindungsgemäßer Gliederschürzeneinrichtungen einschließlich der zugehörigen Führungsschienen in teilweise geschnittener Ansicht, wobei die Blickrichtung entlang des Trägerbandes 1 verläuft. Dabei sind die in der Darstellung der **Fig. 14** bis **16** quer geschnittenen Führungsschienen 12 jeweils schraffiert dargestellt, während das Trägerband 1 wiederum zur besseren Erkennbarkeit schwarz eingefärbt ist.

Die Gliederschürzeneinrichtung gemäß **Fig. 14** weist dabei U-förmige Führungsschienen auf, während die Gliederschürzeneinrichtung gemäß **Fig. 15** eine in L-förmigen Führungsschienen geführte Gliederschürze besitzt. Die Gliederschürzeneinrichtung gemäß **Fig. 16** hingegen weist im Wesentlichen bandförmige Führungsschienen mit I-förmigem bzw. Rechteckquerschnitt auf.

Dabei geht insbesondere aus den Darstellungen der **Fig. 15** und **16** hervor, dass dank der Erfindung auch die Führungseinrichtung für die jeweilige Gliederschürze besonders einfach und damit kostengünstig sowie robust im täglichen Einsatz ausgeführt werden kann. Denn die zwischen den Schutzlamellen 6 und dem Trägerband 1 angeordneten Tragstücke 5, die hier wieder mit abragenden Gleitfortsätzen 10 versehen sind, erlauben eine sichere Führung der Gliederschürze auch bei den einen besonders einfachen Querschnitt aufweisenden Führungsschienen 12 mit L-förmigem bzw. I-förmigem Querschnitt gemäß **Fig. 15** bzw. 16.

Dies rührt daher, dass durch die Kombination der überstehenden Enden der Schutzlamellen 6 mit den abragenden Gleitfortsätzen 10 der Tragstücke 5 jeweils im wesentlichen U-förmige Aufnahmen gebildet werden, die dafür sorgen, dass die Gliederschürze sich auch mittels der äußerst einfachen, einen I-förmigen Querschnitt aufweisenden, bandförmigen Schiene gemäß **Fig. 16** sicher führen lässt.

Insbesondere anhand **Fig. 16** erkennt man damit ohne weiteres, dass eine dergestalt aufgebaute Gliederschürzeneinrichtung nicht nur konstruktiv besonders einfach aufgebaut und damit kostengünstig darstellbar ist, sondern zudem auch einen äußerst geringen Bauraumbedarf aufweist, was den oftmals beengten Einbauverhältnissen im Bereich beispielsweise von Werkzeugmaschinen mit großem Vorteil zugutekommt.

Ferner geht aus den Darstellungen der **Fig. 14** bis **16** auch hervor, dass die gezeigten Gliederschürzeneinrichtungen ohne die im Stand der Technik notwendigen und üblichen Bürstenabstreifer auskommen können, die ansonsten auf der zeichnungsbezogen linken Oberfläche der Gliederschürze jeweils im Bereich der Führungsschienen 12 angeordnet sein müssten.

Dies hängt damit zusammen, dass die Führungseinrichtung der Gliederschürze, die bei den Ausführungsformen gemäß **Fig. 14** bis **16** durch die überstehenden Enden der Schutzlamellen 6, durch die Führungsschienen 12 selbst, sowie durch die abragenden Gleitfortsätze 10 der Tragstücke 5 gebildet wird, zunächst einmal mittels der überstehenden Enden der Schutzlamellen 6 komplett abgedeckt und damit gegen Eindringen von Fremdstoffen geschützt ist. Zudem bilden die zuletzt genannten Bestandteile der Führungseinrichtung ein als mehrfach gefalteter enger Spalt ausgebildetes Dichtungslabyrinth, das ein Eindringen von Verunreinigungen und Fremdstoffen äußerst wirkungsvoll unterbindet.

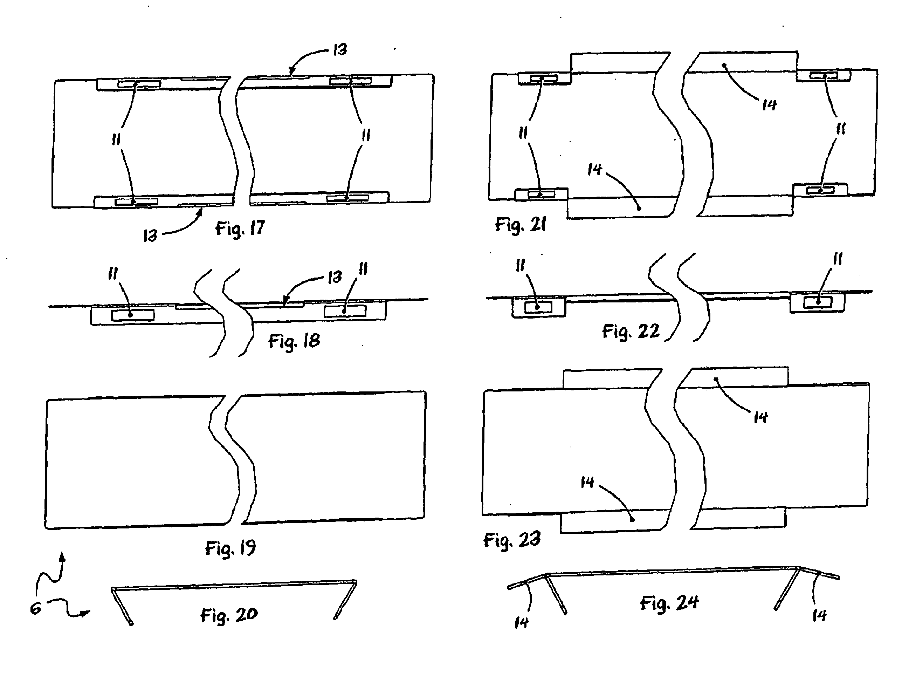

**Fig. 17** bis **24** zeigen Schutzlamellen 6 für eine weitere Ausführungsform einer Gliedcrschürzeneinrichtung gemäß der Erfindung. Diese Ausführungsform der Gliederschürzeneinrichtung unterscheidet sich von den zuvor dargestellten Ausführungsformen insofern, als bei der Ausführungsform gemäß **Fig. 17** und **24** zwei verschiedene Arten von Schutzlamellen 6 vorhanden sind, die jeweils abwechselnd auf dem Trägerband angeordnet werden, in ähnlicher Weise wie in den **Fig. 11** bis **13** dargestellt.

Die beiden verschiedenen Sorten Schutzlamellen 6 umfassen eine erste Sorte Schutzlamellen mit Längsschlitz 13 gemäß **Fig. 17** bis **20****,** sowie eine zweite Sorte Schutzlamellen mit Eingriffslasche 14 gemäß **Fig. 21** bis **24**. Dabei werden die Schutzlamellen 6 mit Längsschlitz 13 und die Schutzlamellen 6 mit Eingriffslasche 14 abwechselnd wieder mittels entsprechender, hier nicht eigens dargestellter Tragstücke 5 auf einem hier ebenfalls nicht dargestellten Trägerband 1 befestigt. Aus den **Fig. 17** bis **24** gehen ferner auch deutlich die Rastdurchbrüche 11 hervor, die der Befestigung der Tragstücke 5 mittels deren Rastvorsprünge 8 dienen, vgl. **Fig. 5** bis **9****.**

Auf diese Weise greifen die Schutzlamellen 6 mit Eingriffslasche 14 in die jeweils benachbarten Schutzlamellen 6 mit Längsschlitz 13 ein, so dass durch die ineinander eingreifenden Schutzlamellen 6 ein noch innigerer Verbund sowie eine geschlossen durchgehende Schutzschicht gegenüber auf die Gliederschürze einwirkende äußere Einflüsse gebildet wird. Dies gilt bei den ineinander eingreifenden Schutzlamellen 6 insbesondere auch dann, wenn die Gliederschürze stellenweise nicht eben verläuft, sondern beispielsweise entlang einer bogenförmigen Kontur bzw. entlang einer gekrümmten Führungsschiene 12 geleitet wird

Im Ergebnis wird somit deutlich, dass dank der Erfindung eine konstruktiv sowie in der Anwendung robuste, dabei jedoch gleichzeitig einen besonders breiten Anwendungsbereich aufweisende Gliederschürzeneinrichtung geschaffen wird. Die erfindungsgemäße Gliederschürzeneinrichtung erlaubt insbesondere erhebliche Massereduzierungen und eine damit verbundene verbesserte Bewegungsdynamik, ferner Kosteneinsparungen sowie konstruktive Vereinfachungen insbesondere im Bereich der Führung der Gliederschürze.

Die Erfindung leistet damit einen wichtigen Beitrag zu Betriebssicherheit, Effizienz und Zuverlässigkeit von beweglichen Schutzsystemen, beispielsweise in der Anwendung im Bereich der Werkzeugmaschinen und Bearbeitungszentren.

## Patentansprüche

1. Gliederschürzeneinrichtung mit Gliederschürze, insbesondere zur bewegbaren Abdeckung von Teilbereichen an Werkzcugmaschinen oder dgl., die Gliederschürze aufweisend eine Mehrzahl sich quer zur Längsachse der Gliederschürze erstreckender Schutzlamellen (6), wobei jede Schutzlamelle (6) im Bereich einer Oberfläche zumindest eines entlang der Längsachse der Gliederschürze verlaufenden Trägerbandes (1) angeordnet ist, und wobei die Längskanten der Gliederschürze mit Führungsschienen (12) zur Führung der Gliederschürze in Eingriff bringbar sind,
**dadurch gekennzeichnet,**
**dass** jeder Schutzlamelle (6) im Bereich jedes ihrer beiden lamellenaxialen Enden zumindest ein zwischen Schutzlamelle (6) und Trägerband (1) angeordnetes Tragstück (5) zugeordnet ist, wobei Tragstück (5) bzw. Schutzlamelle (6) mit einer Führungsschiene (12) der Gliederschürzeneinrichtung in Eingriff bringbar sind.

2. Gliederschürzeneinrichtung nach Anspruch 1,
**dadurch gekennzeichnet,**
**dass** die Tragstücke (5) als Führungselemente zur Führung der Gliederschürze in den Führungsschienen (12) ausgebildet sind.

3. Gliederschürzeneinrichtung nach Anspruch 1 oder 2,
**dadurch gekenntzeichnet,**
**dass** jeder Schutzlamelle (6) zumindest ein weiteres, im Bereich zwischen den beiden lamellenaxialen Enden angeordnetes Tragstück zugeordnet ist.

4. Gliederschürzeneinrichtung nach einem der Ansprüche 1 bis 3,
**dadurch gekennzeichnet,**
**dass** die Tragstücke (5) einen quer zur Längsachse der Gliederschürze abragenden Gleitfortsatz (10) aufweisen.

5. Gliederschürzeneinrichtung nach einem der Ansprüche 1 bis 4,
**dadurch gekennzeichnet,**
**dass** das Tragstück (5) im Bereich der axialen Enden der Schutzlamellen (6) eine Laufrolle aufweist.

6. Gliederschürzeneinrichtung nach einem der Ansprüche 1 bis 5,
**dadurch gekennzeichnet,**
**dass** die Schutzlamellen (6) aus Stahlblech bestehen.

7. Gliederschürzeneinrichtung nach einem der Ansprüche 1 bis 6,
**dadurch gekennzeichnet,**
**dass** die Schutzlamellen (6) aus Federstahl bestehen.

8. Gliederschürzeneinrichtung nach einem der Ansprüche 1 bis 5,
**dadurch gekennzeichnet,**
**dass** die Schutzlamellen (6) ans einem Polymerwerkstoff bestehen.

9. Gliederschürzeneinrichtung nach einem der Ansprüche 1 bis 8,
**dadurch gekennzeichnet,**
**dass** die Schutzlamellen (6) die Form eines langgestreckten Bandes mit zumindest einem längs verlaufenden Versteifungssteg aufweisen.

10. Gliederschürzeneinrichtung nach einem der Ansprüche 1 bis 9,
**dadurch gekennzeichnet,**
**dass** die Schutzlamellen (6) im Bereich Ihrer Längskanten Abkantungen (7) aufweisen.

11. Gliederschürzeneinrichtung nach einem der Ansprüche 1 bis 10,
**dadurch gekennzeichnet,**
**dass** zumindest jede zweite Schutzlamelle (6) der Gliederschürze im Bereich zumindest einer Ihrer Längskanten zumindest einen langgestreckten Schlitz (13) aufweist, wobei zumindest eine im Bereich der Längskante einer benachbarten Schutzlamelle angeordnete langgestreckte Eingriffslasche (14) mit dem Schlitz (13) in Eingriff bringbar ist.

12. Gliederschürzeneinrichtung nach einem der Ansprüche 1 bis 11,
**dadurch gekennzeichnet,**
**dass** die Tragstücke (5) stoffschlüssig mit dem Trägerband (1) verbunden sind.

13. Gliederschürzeneinrichtung nach einem der Ansprüche 1 bis 12,
**dadurch gekennzeichnet,**
**dass** die Tragstücke (5) mit dem Trägerband (1) verklebt sind.

14. Gliederschürzeneinrichtung nach einem der Ansprüche 1 bis 13,
**dadurch gekennzeichnet,**
**dass** die Tragstücke (5) formschlüssig mit dem Trägerband (1) verbunden sind.

15. Gliederschürzeneinrichtung nach einem der Ansprüche 1 bis 14,
**dadurch gekennzeichnet,**
**dass** die Tragstücke (5) mit dem Trägerband (1) verschraubt oder vernietet sind.

16. Gliederschürzeneinrichtung nach Anspruch 15,
**dadurch gekennzeichnet,**
**dass** Niete zur Verbindung des Tragstücks (5) mit dem Trägerband (1) einstückig mit dem Tragstück (5) ausgebildet sind.

17. Gliederschürzeneinrichtung nach Anspruch 15 oder 16,
**dadurch gekennzeichnet,**
**dass** überstehende Kopfbereiche von Befestigungsschrauben oder Nieten als Mitnehmernocken eines motorischen Antriebs der Gliederschürze ausgebildet sind.

18. Gliederschürzeneinrichtung nach einem der Ansprüche 1 bis 11,
**dadurch gekennzeichnet,**
**dass** die Tragstücke (5) einstückig mit dem Trägerband (1) ausgebildet sind.

19. Gliederschürzeneinrichtung nach Anspruch 18,
**dadurch gekennzeichntet,**
**dass** die Schutzlamellen (6) im Bereich Ihrer axialen Enden abragende Biegelaschen aufweisen, die mit formkorrespondierenden Durchbrüchen (4) im Trägerband (1) in Eingriff bringbar sind.

20. Gliederschürzeneinrichtung nach einem der Ansprüche 1 bis 19,
**dadurch gekennzeichnet,**
**dass** die Tragstücke (5) mittels einer Steck-, Rast- oder Schnappverbindung mit den Schutzlamellen (6) verbindbar sind.

21. Gliederschürzeneinrichtung nach Anspruch 20,
**dadurch gekennzeichnet,**
**dass** das Tragstück (5) einen im Wesentlichen prismatischen Verbindungsbereich aufweist, der in lamellenaxialer Richtung in den axialen Endbereich einer Schutzlamelle (6) einschiebbar ist.

22. Gliederschürzeneinrichtung nach Anspruch 20 oder 21,
**dadurch gekennzeichnet,**
**dass** das Tragstück (5) in Einschubrichtung zumindest einen Hinterschnitt (8) aufweist, der mit einem formkorrespondierenden Rastdurchbruch (11) im axialen Endbereich der Schutzlamelle (6) in Eingriff bringbar ist.

23. Gliederschürzeneinrichtung nach Anspruch 22,
**dadurch gekennzeichnet,**
**dass** Durchbruch (11) und Hinterschnitt (8) im Bereich der längsseitigen Abkantung (7) der Schutzlamelle (6) angeordnet sind.

24. Gliederschürzeneinrichtung nach Anspruch 1 bis 23,
**dadurch gekennzeichnet,**
**dass** die axialen Enden der Schutzlamellen (6) gegenüber dem abragenden Gleitfortsatz (10) des Tragstücks (5) in lamellenaxialer Richtung einen Überstand aufweisen.

25. Gliederschürzeneinrichtung nach Anspruch 1 bis 24,
**dadurch gekennzeichnet,**
**dass** die Führungsschiene (12) im Querschnitt im Wesentlichen L-förmig ist.

26. Gliederschürzeneinrichtung nach Anspruch 1 bis 24,
**dadurch gekennzeichnet,**
**dass** die Führungsschienen (12) im Querschnitt im Wesentlichen stabförmig ist.

27. Gliederschürzeneinrichtung nach Anspruch 1 bis 26,
**dadurch gekennzeichnet,**
**dass** die Tragstücke (5) lamellenaxial verlaufende Bohrungsdurchbrüche, bzw. im Bereich ihrer den Schutzlamellen (6) zugewandten Oberfläche lamellenaxial verlaufende Kanäle aufweisen.

28. Gliederschürzeneinrichtung nach Anspruch 1 bis 27,
**dadurch gekennzeichnet,**
**dass** die Gliederschürze zumindest zwei Trägerbänder aufweist, wobei jeder der beiden Längskanten der Gliederschürze eines der zumindest zwei Trägerbänder zugeordnet ist.

29. Gliederschürzeneinrichtung nach Anspruch 1 bis 28,
**dadurch gekennzeichnet,**
**dass** zumindest eine der Schutzlamellen (6) transparent oder durchsichtig ist bzw. ein Fenster aufweist.

## Claims

1. A link apron device comprising a link apron, in particular for movably covering partial regions at machine tools or the like, the link apron encompassing a plurality of protective disks (6) extending at right angles to the longitudinal axis of the link apron, wherein each protective disk (6) is arranged in the region of a surface of at least one supporting strip (1), which runs along the longitudinal axis of the link apron and wherein the longitudinal edges of the link apron can be brought into engagement with guide rails (12) for guiding the link apron,
**characterized in that**
at least one supporting piece (5), which is arranged between the protective disk (6) and the supporting strip (1) is assigned to each protective disk (6) in the region of each of its two disk-axial ends, wherein the supporting piece (5) and the protective disk (6), respectively, can be brought into engagement with a guide rail (12) of the link apron device.

2. The link apron device according to claim 1,
**characterized in that**
the supporting pieces (5) are designed as guide elements for guiding the link apron in the guide rails (12).

3. The link apron device according to claim 1 or 2,
**characterized in that**
at least a further supporting piece, which is arranged in the region between the two disk-axial ends, is assigned to each protective disk (6).

4. The link apron device according to one of claims 1 to 3,
**characterized in that**
the supporting pieces (5) encompass a sliding extension (10), which projects at right angles from the longitudinal axis of the link apron.

5. The link apron device according to one of claims 1 to 4,
**characterized in that**
the supporting piece (5) encompasses a roller in the region of the axial ends of the protective disks (6).

6. The link apron device according to one of claims 1 to 5,
**characterized in that**
the protective disks (6) are made up of sheet steel.

7. The link apron device according to one of claims 1 to 6,
**characterized in that**
the protective disks (6) are made up of spring steel.

8. The link apron device according to one of claims 1 to 5,
**characterized in that**
the protective disks (6) are made up of a polymer material.

9. The link apron device according to one of claims 1 to 8,
**characterized in that**
the protective disks (6) encompass the shape of an elongated strip comprising at least one reinforcement bar, which extends longitudinally.

10. The link apron device according to one of claims 1 to 9,
**characterized in that**
in the region of their longitudinal edges, the protective disks (6) encompass folds (7).

11. The link apron device according to one of claims 1 to 10,
**characterized in that**
at least each second protective disk (6) of the link apron, in the region of at least one of its longitudinal edges, encompasses at least one elongated slit (13), wherein at least one elongated engagement plate (14), which is arranged in the region of the longitudinal edge of an adjacent protective disk, can be brought into engagement with the slit (13).

12. The link apron device according to one of claims 1 to 11,
**characterized in that**
the supporting pieces (5) are connected with the supporting strip (1) in a manner so as to form a material bond.

13. The link apron device according to one of claims 1 to 12,
**characterized in that**
the supporting pieces (5) are bonded with the supporting strip (1).

14. The link apron device according to one of claims 1 to 13,
**characterized in that**
the supporting pieces (5) are connected with the supporting strip (1) in a form-locking manner.

15. The link apron device according to one of claims 1 to 14,
**characterized in that**
the supporting pieces (5) and the supporting strip (1) are screwed or riveted together.

16. The link apron device according to claim 15,
**characterized in that**
rivets for connecting the supporting piece (5) with the supporting strip (1) are designed in one piece with the supporting piece (5).

17. The link apron device according to claim 15 or 16,
**characterized in that**
projecting head regions of fastening screws or rivets are designed as carrier cams of a motor drive of the link apron.

18. The link apron device according to one of claims 1 to 11,
**characterized in that**
the supporting pieces (5) are designed in one piece with the supporting strip (1).

19. The link apron device according to claim 18,
**characterized in that**
the protective disks (6), in the region of their axial ends, encompass projecting bending plates, which can be brought into engagement with form-corresponding cut-outs (4) in the supporting strip (1).

20. The link apron device according to one of claims 1 to 19,
**characterized in that**
the supporting pieces (5) can be connected with the protective disks (6) by means of a plug connection, a catch connection or a snap-in connection.

21. The link apron device according to claim 20,
**characterized in that**
the supporting piece (5) encompasses a substantially prismatic connecting region, which can be inserted into the axial end region of a protective disk (6) in disk-axial direction.

22. The link apron device according to claim 20 or 21,
**characterized in that**
the supporting piece (5), in the direction of insertion, encompasses at least one undercut (8), which can be brought into engagement with a form-corresponding catch cut-out (11) in the axial end region of the protective disk (6).

23. The link apron device according to claim 22,
**characterized in that**
the cut-out (11) and the undercut (8) are arranged in the region of the fold (7) of the protective disk (6) at the long side.

24. The link apron device according to claims 1 to 23,
**characterized in that**
the axial ends of the protective disks (6) opposite the projecting sliding extension (10) of the supporting piece (5) encompass an overhang in disk-axial direction.

25. The link apron device according to claims 1 to 24,
**characterized in that**
the cross section of the guide rail (12) is substantially L-shaped.

26. The link apron device according to claims 1 to 24,
**characterized in that**
the cross section of the guide rail (12) is substantially bar-shaped.

27. The link apron device according to claims 1 to 26,
**characterized in that**
the supporting pieces (5) encompass bore cut-outs, which run in a disk-axial manner and in the region of their surface facing the protective disks (6), respectively, encompass channels, which run in a disk-axial manner.

28. The link apron device according to claims 1 to 27,
**characterized in that**
the link apron encompasses at least two supporting strips, wherein one of the at least two supporting strips is assigned to each of the two longitudinal edges of the link apron.

29. The link apron device according to claims 1 to 28,
**characterized in that**
at least one of the protective disks (6) is transparent or lucent and encompasses a window, respectively.

## Revendications

1. Dispositif de tablier articulé avec un tablier articulé, notamment pour recouvrir de manière mobile des zones partielles de machines-outils ou d'équipements similaires, le tablier articulé étant pourvu d'une pluralité de lamelles de protection (6) s'étendant perpendiculairement à l'axe longitudinal du tablier articulé, chaque lamelle de protection (6) étant disposée dans la zone d'une surface d'au moins une bande support (1) s'étendant le long de l'axe longitudinal du tablier articulé, et les bords longitudinaux du tablier articulé pouvant être mis en prise avec des rails de guidage (12) pour le guidage du tablier articulé,
**caractérisé en ce qu'**
au moins une pièce support (5) disposée entre la lamelle de protection (6) et la bande support (1) est associée à chaque lamelle de protection (6) dans la zone de chacune de ses deux extrémités axiales vues dans la direction de la lamelle, la pièce support (5), respectivement la lamelle de protection (6) pouvant être mise en prise avec un rail de guidage (12) du dispositif de tablier articulé.

2. Dispositif de tablier articulé selon la revendication 1,
**caractérisé en ce que**
les pièces support (5) sont réalisées sous la forme d'éléments de guidage pour le guidage du tablier articulé dans les rails de guidage (12).

3. Dispositif de tablier articulé selon la revendication 1 ou 2,
**caractérisé en ce qu'**
au moins une autre pièce support, disposée dans la zone entre les deux extrémités axiales de la lamelle, est associée à chaque lamelle de protection (6).

4. Dispositif de tablier articulé selon l'une des revendications 1 à 3,
**caractérisé en ce que**
les pièces support (5) sont pourvues d'un prolongement de glissement (10) dépassant perpendiculairement à l'axe longitudinal du tablier articulé.

5. Dispositif de tablier articulé selon l'une des revendications 1 à 4,
**caractérisé en ce que**
la pièce support (5) est pourvue d'un galet de roulement dans la zone des extrémités axiales des lamelles de protection (6).

6. Dispositif de tablier articulé selon l'une des revendications 1 à 5,
**caractérisé en ce que**
les lamelles de protection (6) sont réalisées en tôle d'acier.

7. Dispositif de tablier articulé selon l'une des revendications 1 à 6,
**caractérisé en ce que**
les lamelles de protection (6) sont réalisées en acier à ressorts.

8. Dispositif de tablier articulé selon l'une des revendications 1 à 5,
**caractérisé en ce que**
les lamelles de protection (6) sont réalisées en un matériau polymère.

9. Dispositif de tablier articulé selon l'une des revendications 1 à 8,
**caractérisé en ce que**
les lamelles de protection (6) ont la forme d'une bande allongée avec au moins une nervure de renfort s'étendant longitudinalement.

10. Dispositif de tablier articulé selon l'une des revendications 1 à 9,
**caractérisé en ce que**
les lamelles de protection (6) présentent des plis (7) dans la zone de leurs bords longitudinaux.

11. Dispositif de tablier articulé selon l'une des revendications 1 à 10,
**caractérisé en ce qu'**
au moins chaque deuxième lamelle de protection (6) du tablier articulé est pourvue, dans la zone d'au moins un de ses bords longitudinaux, d'au moins une fente (13) allongée, au moins une patte d'engagement (14) allongée, disposée dans la zone du bord longitudinal d'une lamelle de protection adjacente, pouvant être engagée dans la fente (13).

12. Dispositif de tablier articulé selon l'une des revendications 1 à 11,
**caractérisé en ce que**
les pièces support (5) sont reliées par liaison directe des matériaux avec la bande support (1).

13. Dispositif de tablier articulé selon l'une des revendications 1 à 12,
**caractérisé en ce que**
les pièces support (5) sont collées sur la bande support (1).

14. Dispositif de tablier articulé selon l'une des revendications 1 à 13,
**caractérisé en ce que**
les pièces support (5) sont reliées de manière positive avec la bande support (1).

15. Dispositif de tablier articulé selon l'une des revendications 1 à 14,
**caractérisé en ce que**
les pièces support (5) sont vissées ou rivetées sur la bande support (1).

16. Dispositif de tablier articulé selon la revendication 15,
**caractérisé en ce que**
les rivets pour la liaison de la pièce support (5) avec la bande support (1) sont réalisés d'un seul tenant avec la pièce support (5).

17. Dispositif de tablier articulé selon la revendication 15 ou 16,
**caractérisé en ce que**
les zones dépassantes des têtes des vis de fixation ou des rivets sont réalisées sous la forme de taquets d'entraînement pour un entraînement motorisé du tablier articulé.

18. Dispositif de tablier articulé selon l'une des revendications 1 à 11,
**caractérisé en ce que**
les pièces support (5) sont réalisées d'un seul tenant avec la bande support (1).

19. Dispositif de tablier articulé selon la revendication 18,
**caractérisé en ce que**
les lamelles de protection (6) sont pourvues, dans la zone de leurs extrémités axiales, de languettes pliées dépassantes pouvant être mises en prise dans des ouvertures de forme correspondante (4) dans la bande support (1).

20. Dispositif de tablier articulé selon l'une des revendications 1 à 19,
**caractérisé en ce que**
les pièces support (5) peuvent être reliées avec les lamelles de protection (6) au moyen d'une liaison à emboîtement, à encliquetage ou à enclenchement.

21. Dispositif de tablier articulé selon la revendication 20,
**caractérisé en ce que**
la pièce support (5) présente une zone de liaison sensiblement prismatique pouvant être introduite, dans la direction axiale des lamelles, dans la zone d'extrémité axiale d'une lamelle de protection (6).

22. Dispositif de tablier articulé selon la revendication 20 ou 21,
**caractérisé en ce que**
la pièce support (5) est pourvue, dans la direction de l'introduction, d'au moins un ergot en contre-dépouille (8) pouvant être mis en prise avec une ouverture d'encliquetage (11) de forme correspondante dans la zone d'extrémité axiale de la lamelle de protection (6).

23. Dispositif de tablier articulé selon la revendication 22,
**caractérisé en ce que**
l'ouverture (11) et l'ergot en contre-dépouille (8) sont disposés dans la zone du pli (7) sur le côté longitudinal de la lamelle de protection (6).

24. Dispositif de tablier articulé selon les revendications 1 à 23,
**caractérisé en ce que**
les extrémités axiales des lamelles de protection (6) sont pourvues, dans la direction axiale des lamelles, d'une saillie par rapport au prolongement de glissement (10) dépassant de la pièce support (5).

25. Dispositif de tablier articulé selon les revendications 1 à 24,
**caractérisé en ce que**
le rail de guidage (12) présente une section sensiblement en forme de L.

26. Dispositif de tablier articulé selon les revendications 1 à 24,
**caractérisé en ce que**
le rail de guidage (12) présente une section sensiblement en forme de baguette.

27. Dispositif de tablier articulé selon les revendications 1 à 26,
**caractérisé en ce que**
les pièces support (5) sont pourvues de perçages débouchants s'étendant dans la direction axiale des lamelles ou, dans la zone de leur surface orientée en direction des lamelles de protection (6), de canaux s'étendant dans la direction axiale des lamelles.

28. Dispositif de tablier articulé selon les revendications 1 à 27,
**caractérisé en ce que**
le tablier articulé est pourvu d'au moins deux bandes support, chacun des deux bords longitudinaux du tablier articulé étant associé à l'une des au moins deux bandes support.

29. Dispositif de tablier articulé selon les revendications 1 à 28,
**caractérisé en ce qu'**
au moins une des lamelles de protection (6) est translucide ou transparente, ou est pourvue d'une fenêtre.
